# FASCICULE DE BREVET EUROPEEN

(11) **EP 4 544 365 B1**
(45) Date de publication et mention de la délivrance du brevet: **15.04.2026**
(21) Numéro de dépôt: 23754330.1
(22) Date de dépôt: 11.08.2023
(51) Int. Cl.: G05D 1/229, G05D 1/248, G05D 1/648

(54) **ROBOT MOBILE ET MÉTHODE DE CONTRÔLE D'UN DÉPLACEMENT D'UN ROBOT MOBILE**
MOBILER ROBOTER UND VERFAHREN ZUR STEUERUNG EINER BEWEGUNG EINES MOBILEN ROBOTERS
MOBILE ROBOT AND METHOD FOR CONTROLLING A MOVEMENT OF A MOBILE ROBOT

(30) Priorité: 18.08.2022 BE 202205648
(43) Date de publication de la demande: 30.04.2025
(60) Demande divisionnaire: 26161773.2
(73) Titulaire: Yamabiko Europe, 1300 Wavre (BE)
(72) Inventeur: PAQUES, Pierre, 5030 Gembloux (BE); DRUET, Emmanuel, 5000 Namur (BE); GORRENS, Wim, 3020 Herent (BE); COURTOIS, Pierre, 1050 Bruxelles (BE)
(74) Mandataire: Gevers Patents
(86) Numéro de dépôt international: PCT/EP2023/072348
(87) Numéro de publication internationale: WO 2024/037995

(56) Documents cités:
- WO-A1-2020/147159
- WO-A1-2021/239836
- US-A1- 2022 129 000

## Description

### Domaine technique

La présente invention concerne un robot mobile, par exemple, une tondeuse ou une ramasseuse de balles de golf robotisée, ainsi qu'une méthode de contrôle d'un déplacement d'un tel robot mobile.

### Art antérieur

Afin de contrôler le déplacement d'une tondeuse robotisée dans une zone géographique, il est connu de border la zone géographique d'un câble électrique, potentiellement enterré, émettant un signal, et de munir la tondeuse d'un système de navigation comprenant un capteur de proximité de ce signal. Le déplacement de la tondeuse est ainsi contrôlé sur base d'instructions du système de navigation de façon à ce que la tondeuse reste dans la zone géographique. Par exemple, le document WO 96/38770 A1 divulgue un contrôle de déplacement y afférant.

Cet état de la technique souffre cependant de désavantages. D'une part, un simple câble électrique n'offre pas de garantie de limitation du déplacement de la tondeuse suffisante auprès de zones géographiques sensibles telles qu'une piste d'un aéroport. D'autres part, cette délimitation du déplacement de la tondeuse ne permet pas de tenir compte de contraintes dynamiques susceptibles de survenir, telles qu'une inondation partielle de la zone géographique ou une activité sur une partie de celle-ci.

La publication WO 2021/239836 A1 divulgue, quant à elle, une méthode de limitation spatiale d'un déplacement d'une tondeuse robotisée muni d'un système de navigation ne permettant que de surmonter le premier désavantage susdit par l'utilisation d'un système de sécurité indépendant du système de navigation pour immobiliser la tondeuse robotisée dans certaines circonstances.

La publication WO 2020/147159 A1 divulgue une méthode de délimitation d'une zone de tonte ne permettant que de surmonter le deuxième désavantage susdit par l'acquisition d'un paramètre de caractéristique d'emplacement d'un robot de tonte, l'acquisition, selon le paramètre de caractéristique d'emplacement, d'une image réelle d'une pelouse à l'intérieur d'une zone dans laquelle se trouve le robot de tonte, l'affichage de l'image réelle, et l'acquisition des informations de rétroaction d'utilisateur renvoyées sur la base de l'image réelle, et finalement la détermination, selon les informations de rétroaction d'utilisateur, d'une zone cible devant être tondue par le robot de tonte.

La publication US 2022/129000 A1 traite d'une machine autonome qui peut être commandée pour fonctionner dans une zone selon un certain programme qui attribue une ou plusieurs tâches opérationnelles à une ou plusieurs fenêtres de disponibilité sur la base du temps de fonctionnement total de la machine. Celle-ci adopte ainsi un fonctionnement plus dynamique sans intervention d'un utilisateur.

### Exposé de l'invention

Un objet de l'invention est de fournir un robot mobile muni de moyens qui permettent un contrôle plus sûr et plus dynamique de son déplacement dans une zone géographique.

À cet effet, l'invention propose un robot mobile comprenant :
- une unité d'entraînement moteur ;
- un système de navigation couplé à l'unité d'entraînement moteur pour contrôler un déplacement du robot dans une zone géographique ;
dans lequel le système de navigation comprend :
- un récepteur pour recevoir des données de position du robot,
- un support de données sur lequel sont enregistrés des paramètres de contrôle de déplacement du robot,
   les paramètres comprenant :
   - des premiers paramètres de définition de la zone géographique,
   - des deuxièmes paramètres de définition d'une ou plusieurs sous-zones de la zone géographiques,
- un module électronique connecté au récepteur et au support de données, et programmé pour déterminer :
   - des premières données de comparaison entre les données de position du robot et les premiers paramètres de définition de la zone géographique,
   - des deuxièmes données de comparaison entre les données de position du robot et les deuxièmes paramètres de définition de la ou des sous-zones.

Une commande d'accès à distance du système de navigation est prévue pour modifier librement lesdits deuxièmes paramètres. Pour des premiers paramètres associés à une signature électronique, la commande d'accès permet de modifier les premiers paramètres et de générer la signature à laquelle ceux-ci sont associés sur base d'une validation des premiers paramètres comprenant un déplacement du robot le long d'un bord de la zone géographique définie par les premiers paramètres ainsi modifiés. Le système de navigation est configuré (par exemple, programmé) pour contrôler le déplacement du robot dans la zone géographique sur base des premières et des deuxièmes données de comparaison.

Le déplacement du robot selon l'invention peut être contrôlé de façon plus sûre et plus dynamique sur la zone géographique que celui des robots mobiles selon l'art antérieur. En effet, ce robot est muni de moyens techniques permettant de contrôler son déplacement dans la zone géographique, en le limitant de façon fiable à celle-ci, tout en le rendant plus dynamique par sous-zone selon diverses contraintes susceptibles d'apparaître localement dans la zone géographique. Le récepteur permet au robot de recevoir, typiquement continument, des données de position du robot dans la zone géographique, tandis que le module électronique permet les comparer à la fois à la définition de la zone géographique et à celle de la ou des sous-zones, via les premiers et deuxièmes paramètres, pour en déduire les premières et deuxièmes données de comparaison. Celles-ci sont alors utiliser par le système de navigation afin de contrôler le déplacement le robot dans la zone géographique. En particulier, de cette façon ce contrôle tient compte de la zone géographique, notamment de sa limite, mais aussi de la ou des sous-zones, et permet par exemple de s'assurer que le robot reste dans la zone géographique d'une part, et dans une ou des sous-zones prédéterminées d'autres part.

L'invention allie à la fois l'intégration d'une installation sécurisée et fiable du robot dans une zone géographique, tout en permettant une évolution dynamique de la limitation de son déplacement au regard de sous-zones. La difficulté dans l'obtention de cet effet avantageux réside dans le fait que la zone géographique en elle-même est difficilement modifiable de façon rapide, dynamique et réactive, tout en garantissant un haut niveau de sécurité des limites de déplacement du robot. Ces exigences vont généralement à l'encontre d'une facilité de modification des premiers paramètres. Un obstacle pratique évident additionnel se présente à cet égard lorsque la zone géographique est en outre définie et bordée d'un câble électrique, car une modification de la zone géographique nécessiterait de modifier la position du câble.

Pour atteindre ces avantages, les limites de déplacement du robot dans la zone géographique sont enregistrés sur le support de données du système de navigation et pris en compte de façon certaine par son module électronique. Cette limitation virtuelle de la zone géographique peut en outre être couplée avec une limitation physique connue de l'art antérieur pour accroître la fiabilité du contrôle du robot dans la zone géographique. De préférence, les premiers paramètres sont chiffrés et modifiables uniquement sur base d'une clé de déchiffrement, de façon à ce que la définition de la zone géographique sous forme de paramètres ne soit modifiables que par un nombre restreint de personnes possédant cette clé, par exemple un installateur du robot.

Pour contre balancer le manque de dynamisme dans le contrôle sécurisé du déplacement du robot au regard des limites de la zone géographique, une ou des sous-zones sont définies via les deuxièmes paramètres et prises en compte dans le contrôle du déplacement du robot via les deuxièmes données de comparaison. Ces sous-zones permettent d'accroître le dynamisme du contrôle du robot dans la zone géographique car elles peuvent faire l'objet de conditions de redéfinition plus flexibles. En particulier, comme ces sous-zones correspondent à des deuxièmes paramètres enregistrés sur le support de données, il est tout à fait envisageable de prévoir que ces paramètres soient modifiables dynamiquement à distance et sans protocole de sécurité. Ceci permet d'accroître le dynamisme dans le contrôle de déplacement du robot dans la zone géographique, par exemple en prenant en compte de diverses contraintes, sans perte en termes de sécurité et fiabilité de la limitation (« maximale ») du déplacement du robot dans la zone géographique.

En particulier, la présente invention offre à l'utilisateur du robot la possibilité de définir, à volonté et librement, la ou les sous-zones, sans risque et sans nécessité de devoir se conformer aux mêmes normes de sécurité de contrôle de déplacement du robot que pour la zone géographique, par exemple, un parcours de validation du robot le long du bord de la zone géographique tel qu'il est exposé ci-après en fin d'exposé de l'invention.

Ceci permet un gain de temps pour l'utilisateur dans la définition de la ou des sous-zones de même qu'un dynamisme accru du contrôle du robot.

La détermination des premières données de comparaison par le module électronique est typiquement indépendante de celle des deuxièmes données de comparaison, bien que reposant sur les mêmes données de position.

De préférence, les deuxièmes paramètres définissent une pluralité de sous-zones, de sorte que le terme « sous-zones » au pluriel sera généralement utilisé dans le cadre de ce document en référence « à la ou aux sous-zones ». Dans plusieurs modes de réalisation de l'invention, l'utilisation de plusieurs sous-zones apparaîtra en outre directement à l'homme du métier.

Dans le cadre de ce document, le terme « robot » fait référence de façon générique à toute machine robotisée connue. Le robot peut être existant dans la zone géographique. Le robot consiste, par exemple, préférentiellement, en une ramasseuse de balles de golf robotisée ou en une tondeuse robotisée. Auquel cas, la zone géographique correspond de préférence à tout ou partie d'un terrain de golf. Tel que connu d'un homme du métier, une tondeuse est de préférence configurée pour tondre au moins une portion herbeuse de la zone géographique, et une ramasseuse de balles de golf est de préférence configurée pour ramasser des balles de golf jouées.

Dans le cadre de ce document, les termes de « zone géographique » et « sous-zone » sont utilisés pour désigner une partie d'un terrain sur laquelle le robot est apte à se déplacer. Une telle zone comprend par exemple une portion (ou surface) herbeuse (ou encore parcelle d'herbe) notamment lorsque le robot consiste en une tondeuse robotisée. Les zone et/ou sous-zones sont susceptibles de ne pas être d'un seul tenant (c'est-à-dire non connexes). Dans une réalisation exemplative de l'invention, la zone géographique et les sous-zones sont chacune d'un seul tenant. Dans une autre réalisation de l'invention, la zone géographique consiste en plusieurs parties de terrain disjointes, tandis que les sous-zones sont d'un seul tenant.

La zone géographique sur laquelle se déplace le robot selon l'invention peut être délimitée par une barrière physique. En particulier, la présence d'émetteurs de signaux bordant la zone géographique, par exemple câble électrique parcouru par un courant électrique, combinée à l'intégration d'un capteur de ces signaux connecté au système de navigation, est préférée car elle permet une double prise en compte des limites de la zone géographique par le robot, à savoir celle via les premiers paramètres enregistrés, et celle via les signaux captés. D'autres types de barrière physique peuvent être utilisées pour accroître la sûreté du contrôle de déplacement du robot. Une telle barrière physique reste cependant optionnelle.

L'invention présente un avantage marqué lors qu'une telle barrière physique est prévue car elle permet un dynamisme dans le contrôle des déplacements du robot au niveau de sous-zones, sans qu'il soit nécessaire de modifier la définition de la zone géographique, et donc le positionnement de la barrière. En outre, celle-ci et la prise en compte des premières données de comparaison par le système de navigation peut constituer une sécurité supplémentaire pour s'assurer que le robot ne sorte pas de la zone géographique en cas de défaillance du contrôle du déplacement au regard des sous-zones.

Les sous-zones ne sont quant à elles pas nécessairement bordées par une ou plusieurs barrières physiques compte tenu de leur objet. Leur définition repose de préférence sur les deuxièmes paramètres et est donc essentiellement virtuelle. Si la zone géographique comprend toutefois une barrière physique délimitant une ou plusieurs des sous-zones, le contrôle du déplacement du robot sur base des deuxièmes données de comparaison est préférentiellement indépendant de cette barrière physique.

De façon générale, l'implémentation du robot selon l'invention ne nécessite pas de barrière physique, et le contrôle du déplacement du robot par le système de navigation peut être totalement indépendant de telles barrières physiques.

Dans le cadre du présent document, les termes « coupler », « couplage » et leurs dérivés font de préférence référence à des couplages électriques et/ou électromécaniques permettant une transmission d'informations et/ou d'instructions au sein des composantes du robot. Par exemple, un couplage, de préférence électrique, entre l'unité d'entraînement moteur et le système de navigation permet au système de navigation d'envoyer des instructions de déplacement du robot dans la zone géographique, celles-ci correspondant au contrôle du déplacement du robot déterminé par le système de navigation. Le terme « couplé » (et ses dérivés) peut optionnellement être substitué à « apte à communiquer avec » dans le cadre de ce document.

Dans le cadre du présent document, les termes « sur base de » données, « en fonction de » données, ou encore « à partir de » données, ne doivent pas être interprétés de façon restrictive comme correspondant au fait que seules les données citées sont ou peuvent être prises en compte. Par exemple, le contrôle du déplacement du robot sur base des premières et des deuxièmes données de comparaison n'implique pas que ces données sont les seuls qui puissent être prises en compte pour contrôler le déplacement du robot. Par exemple, comme mentionné ci-dessus, des signaux émis par d'éventuels émetteurs bordant la zone géographique pourraient également être pris en compte.

L'usage, dans ce document, du verbe « comprendre », de ses variantes, ainsi que ses conjugaisons, n'exclut aucunement la présence d'éléments autres que ceux mentionnés. L'usage de l'article indéfini « un », « une », ou de l'article défini « le », « la » ou « l' », pour introduire un élément n'exclut pas la présence d'une pluralité de ces éléments.

Les termes « premier », « deuxième », « troisième », etc. sont, quant à eux, utilisés dans ce document afin de différencier différents éléments, sans impliquer d'ordre entre ces éléments. Les premiers paramètres sont toutefois de préférence déterminés et/ou enregistrés sur le support de données du système de navigation avant les autres paramètres lors de la programmation et/ou de l'installation du robot.

Le terme « données de position » utilisé dans ce document, ne doit pas être interprété comme référant de façon limitative à des seules coordonnées spatiales, mais s'étend à d'autres données relatives à la position du robot. En particulier, le récepteur peut faire partie intégrante d'au moins un système de positionnement de proximité (par exemple, par caméra, lidar, radar, et/ou sonar) et/ou de type « temps vol » (par exemple, par satellites, wifi et/ou bande ultra large). Dans ce deuxième cas, le récepteur reçoit régulièrement ou en permanence des données de position passivement tel qu'il est connu d'un homme du métier. L'usage de récepteur temps de vol est préféré de par leur fiabilité et leur précision dans le cadre de l'invention.

De préférence, le récepteur est un récepteur de signaux d'un système de positionnement par satellites (GNSS, pour « *Géolocalisation et Navigation par un Système de Satellites* »)*.* De tels systèmes connus d'un homme du métier sont, par exemple, GPS, GLONASS, Beidou et Galileo. Dans ce cas, les données de position reçues par le récepteur sont de préférence des coordonnées GNSS.

Le récepteur est de préférence un récepteur « GNSS RTK », c'est-à-dire, un récepteur GNSS par cinématique temps réel. Un système GNSS RTK est connu d'un homme du métier et comprend à la fois le système GNSS classique et un récepteur fixe, appelé « base RTK », dont la position, par exemple, dans la zone géographique, est connue précisément. Ceci permet de comparer les données de position reçues du système GNSS avec cette position connue, de façon à en déduire des corrections en temps réels (dites « RTK ») des données de position et ainsi d'accroître la précision de celles-ci. Ce récepteur fixe permet aussi un envoi de ces corrections RTK vers le récepteur GNSS mobile du système de navigation du robot, pour que ce dernier ou, par exemple, le module électronique, en tienne compte aux fins de détermination des premières et deuxièmes données de comparaison. Cet envoi peut être effectué par un réseau de communication sans fil.

L'usage d'un récepteur GNSS RTK permet d'atteindre de grandes précisions de données de position, de l'ordre de quelques centimètres (de l'ordre de 1 à 2 cm dans des conditions idéales), et donc de répondre pleinement au besoin de contrôler précisément le déplacement du robot dans la zone géographique.

Optionnellement, il est possible d'utiliser une combinaison d'une base RTK placée dans la zone géographique aux fins de contrôle de déplacement du robot, et d'une autre base RTK préexistante. Ceci améliore la rapidité du calibrage de la réception GNSS RTK et la sécurité du contrôle du déplacement du robot.

Lorsque le récepteur est un récepteur GNSS, les premiers et les deuxièmes paramètres comprennent préférentiellement des coordonnées GNSS. Il est ainsi possible pour le module électronique de comparer très aisément les coordonnées GNSS reçues via le récepteur et celle enregistrées sur le support de données car elles sont de même nature. Le module électronique peut en déduire en temps réel une position relative du robot par rapport à la (limite de la) zone géographique et par rapport aux (limites des) sous-zones, cette information étant alors utilisée pour contrôler le déplacement du robot dans la zone géographique.

Dans ce cas, la zone géographique et/ou les sous-zones sont de préférence définies respectivement par les premiers et deuxièmes paramètres au moyen de cartes de géorepérage (par géo-fencing), dont chacune comprend une pluralité de points de position reliés entre eux, de façon à former un polygone.

Avantageusement, l'enregistrement des premiers et deuxièmes paramètres sur le support de données facilite la détermination d'une trajectoire pour le robot dans la zone géographique, notamment lorsque ces paramètres comprennent ces coordonnées GNSS, car le système de navigation les connaît alors précisément. La détermination de cette trajectoire est notamment plus aisée dans le cas où les sous-zones sur lesquelles le robot doit se déplacer forme un terrain concave.

Les données de position et/ou les premiers et/ou deuxièmes et/ou autres paramètres peuvent comprendre d'autres informations. Par exemple, pour tenir compte de contraintes extérieures dans certaines parties de la zone géographique du robot, il peut être prévu que les sous-zones et/ou leurs propriétés varient en fonction du temps, et soient associées à des fenêtres horaires. En particulier, les données de position comprennent de préférence une composante de temps, les deuxièmes paramètres dépendant alors de cette composante de temps. Dans ce cas, les données de position et les deuxièmes paramètres se réfèrent alors à des positions dans l'espace-temps (comprenant donc une composante d'espace, i.e. une donnée de position spatiale, et une composante de temps, i.e. une donnée de position temporelle).

Comme les deuxièmes paramètres dépendent d'une composante de temps des données de position, la définition des sous-zones et les deuxièmes données de comparaison dépendent aussi du temps. De cette manière, il est possible de faire varier ces sous-zones selon un horaire, ce qui est avantageux pour adapter le contrôle et la limitation des déplacements du robot aux activités prévues au sein de la zone géographique. Par exemple, si celle-ci consiste en un terrain de golf, il est possible de définir plusieurs sous-zones en fonction d'horaires d'activités sur ce terrain, et en fonction de la densité de balles de golf attendues à ramasser pour un robot consistant en une ramasseuse de telles balles. Par exemple, si la zone géographique consiste en une portion herbeuse jouxtant une piste d'aéroport, il est possible de définir une sous-zone d'opération variable en fonction du temps pour un robot consistant en une tondeuse. Cette sous-zone d'opération comprend alors des épaulements de piste uniquement en dehors des heures de décollages et d'atterrissages de l'aéroport pour des raisons de sécurité. Il va sans dire que de façon générale la dépendance en fonction du temps susdite peut se faire selon différents critères (heures d'une journées, jours de la semaine, saisons annuelles, etc.).

De façon générale, les paramètres peuvent comprendre des informations à prendre en compte, en particulier par sous-zones, autres que de nature spatiale ou temporelle. Par exemple, des paramètres peuvent établir un mode de parcours aléatoire ou structuré par sous-zone. Par exemple, une orientation d'une direction de parcours aller-retour réguliers spatialement successives et/ou des hauteurs de coupe peuvent être définies par sous-zone pour des raisons esthétiques dans le cas d'une tondeuse robotisée. Ceci est tout particulièrement utile pour des zones géographiques en terrain sportif.

Des paramètres peuvent en outre être pris en compte spécifiquement par le système de navigation, notamment en plus des premières et deuxièmes données de comparaison. Ces paramètres peuvent définir par exemple des instructions de retour du robot à une station de chargement (par exemple, conditions de retour à la station, utilisation d'un chemin prédéterminé de la zone géographique, ...)

Dans ce cas, ces paramètres sont pris en compte de façon prioritaire sur les deuxièmes données de comparaison pour contrôler le déplacement du robot. En particulier, les sous-zones ne doivent pas nécessairement être reliée à la station. Le robot peut optionnellement traverser une partie de la zone géographique qui n'est pas une sous-zone pour se rendre directement à la station de chargement en restant dans la zone géographique. Toutefois, si des sous-zones interdites (i.e. auxquelles le robot ne peut avoir accès) sont définies, tel qu'il sera introduit ci-après, le contrôle de déplacement du robot se fait alors de préférence en prenant en compte en priorité les premières données de comparaison, puis les deuxièmes données de comparaison associées à ces sous-zones interdites, et puis enfin ces paramètres, dans cet ordre, pour respecter ces sous-zones interdites en restant en permanence dans la zone géographique.

De façon générale, de préférence, la prise en compte par le système de navigation des premières données de comparaison est toujours prioritaire sur celle des deuxièmes données de comparaison pour contrôler le déplacement (ou en particulier, déterminer une trajectoire de déplacement) du robot étant donné qu'il est essentiel que le robot reste dans la zone géographique.

De préférence, les premières et/ou les deuxièmes données de comparaison sont déterminées par module électronique sur base d'une fréquence de réception et/ou d'une précision des données de position.

Par exemple, si cette fréquence et/ou cette précision sont inférieures à des seuils donnés, le module électronique est programmé pour réduire fictivement la taille de la zone géographique et/ou des sous-zones et évaluer les premières et/ou deuxièmes données de comparaison en terme d'écart entre la position du robot et le bord de la zone géographique et/ou de sous-zones ainsi réduites. Ceci permet d'éviter que le robot ne sorte de la zone géographique et/ou d'une sous-zone donnée compte tenu d'un trop grand délai exceptionnel pour la réception des données de position et/ou de données de corrections RTK, et/ou d'une trop grand imprécision temporaire sur celles-ci. Ladite réduction peut par exemple être proportionnelle à la fréquence de réception et/ou à la marge d'erreur des données de position par rapport à une fréquence de réception et/ou une marge d'erreur (ou une précision) de référence habituelles ou attendues des données de position.

De préférence, le système de navigation comprend une commande d'accès à distance prévu pour modifier librement les deuxièmes paramètres.

La modification des deuxièmes paramètres peut se faire avantageusement sans protocole de sécurité additionnel par rapport au protocole éventuel associé à la commande d'accès à distance, et donc de façon rapide et réactive selon les besoins de l'utilisateur.

La commande à distance permet également et de préférence de modifier les premiers paramètres et/ou autres paramètres. Dans ce cas, la modification de ces premiers paramètres peut se faire via une clé de protection (par exemple, un mot de passe d'un administrateur ou d'un installateur du robot) et/ou de chiffrement. Les premiers paramètres ne sont ainsi modifiables que par une personne habilitée possédant la clé de protection et/ou de chiffrement. L'utilisateur usuel du robot ne peut alors modifier que les sous-zones, sans peine et sans risque de commettre une erreur qui amènerait le robot en dehors de la zone géographique.

Les premiers paramètres sont associés à une signature électronique. Une fonction de contrôle ou de chiffrement peut par exemple être appliquée aux points de position d'une carte de géorepérage sous-jacente à la définition de la zone géographique (comme il est introduit ci-dessus), pour générer une signature attachée à ces points permettant d'authentifier ceux-ci. De préférence, lorsque le récepteur est un récepteur GNSS RTK, cette fonction prend également en entrée la position d'une base RTK et/ou un identifiant de cette base. De cette façon, non seulement la définition de la zone géographique via les premiers paramètres est protégée tant au regard des points de de positions qui la définisse, mais aussi au regard d'un éventuel déplacement ou d'une corruption de la base RTK.

Cette signature est générée sur base d'une validation des premiers paramètres comprenant un déplacement du robot le long d'un bord de la zone géographique définie par les premiers paramètres. La validation s'apparente par exemple à une sous-étape de détermination et d'enregistrement des premiers paramètres sur le support de données telle que décrite ci-après dans l'exposé de l'invention. La validation permet de cette façon une génération automatique de la signature associée à ces premiers paramètres, par exemple, sur base du procédé susmentionné. Avantageusement, la signature permet de vérifier que les premiers paramètres (et potentiellement les paramètres relatif à la base RTK) n'ont pas été modifiés ou corrompus volontairement (par exemple, via la commande à distance) sans avoir effectué ladite validation, ou involontairement (par exemple, dû à une corruption du support de données, ou des perturbations électromagnétiques). La signature permet en particulier de forcer cette validation des premiers paramètres, en particulier s'ils sont modifiés.

Une modification des premiers paramètres sans vérification des normes de sécurité correspondant à cette signature (et notamment à la validation susdite) est ainsi avantageusement rendue impossible. Par exemple, si une modification des premiers paramètres est détectée et que l'ancienne signature ne correspond plus aux premiers paramètres modifiés, ceux-ci sont invalidés et le robot est empêché de se déplacer dans la zone géographique associée à ces paramètres, de même que dans les sous-zones qui y sont apparentées, tant que la validation n'est pas effectuée (et donc tant que la nouvelle signature n'est pas générée).

De préférence, la commande à distance permet en particulier d'une part de modifier les premiers paramètres, et d'autre part de générer la signature à laquelle ils sont associés sur base d'une validation de ces premiers paramètres. Comme précédemment, celle-ci comprend de préférence un déplacement du robot le long d'un bord de la zone géographique définie par les premiers paramètres modifiés. Ainsi, le déplacement du robot est davantage sécurisé car toute modification des premiers paramètres est nécessairement soumise à cette validation.

La commande d'accès à distance prévoit de préférence une connexion sans fil sécurisée, par exemple par protocole SSH, avec une interface d'utilisateur. Plus généralement, la commande d'accès à distance fait préférentiellement partie d'un ordinateur (ou un système informatique). Les deuxièmes paramètres sont alors de préférence déterminés par cet ordinateur sur base des premiers paramètres et sur base de données d'entrée d'un utilisateur.

Dans le cadre de ce document, le terme « ordinateur » désigne tout type de processeur ou de circuit intégré connu, fixe ou mobile, susceptible d'exécuter un algorithme. De la même façon, le terme « support de données » peut consister en tout type de support pour des informations numériques tel qu'un serveur, une clé USB, un disque dur d'ordinateur ou un nuage de données.

Dans le cadre de ce document, le terme « algorithme » et ses dérivés ne sont pas à comprendre de façon limitée comme se référant à une formule ou à un programme spécifique, mais fait référence génériquement à toute transformation de données d'entrée en données de sortie, qui est en particulier susceptible d'être exécutable et/ou assignable par ordinateur, sans s'y limiter. Les exemples de tels algorithmes implicitement ou explicitement évoqués dans l'exposé de l'invention ou la description ne sont pas limitatifs et un homme du métier comprendra tout à fait que d'autres types de transformation peuvent être utilisées le cas échéant.

Optionnellement, le système de navigation comprend une autre commande de contrôle à distance pour recevoir des instructions de contrôle de déplacement du robot d'un opérateur, le contrôle du déplacement du robot se faisant aussi sur base de ces instructions (prioritairement ou non sur les premières et deuxièmes données de comparaison). Dans ce cas, le premier récepteur permet un contrôle automatique du déplacement du robot dans la zone géographique, en fonction de la position en temps réel du robot, alors que la commande de contrôle à distance permet un contrôle manuel, typiquement ponctuel, du déplacement du robot, en fonction d'instructions d'un opérateur externe, envoyée, par exemple, au moyen d'une télécommande, via un réseau sans fil. De préférence, le robot mobile est toutefois (essentiellement) autonome. De préférence, le contrôle du déplacement du robot se fait de façon autonome selon les premières et deuxièmes données de comparaison (et donc selon des données de position reçues du récepteur).

Selon un mode de réalisation préféré de l'invention, le robot comprend des moyens d'immobilisation pour immobiliser le robot, le système de navigation étant couplé aux moyens d'immobilisation pour activer et/ou désactiver ceux-ci sur base des premières données de comparaison, et de préférence seulement sur base de celles-ci.

Avantageusement, les moyens d'immobilisation du robot accroissent encore la sécurité de contrôle du déplacement du robot au regard des limites de la zone géographique. Ils sont spécifiquement prévue pour immobiliser le robot si les premières données de comparaison correspondent à une position inappropriée du robot au regard des premiers paramètres, et donc de la zone géographique dans sa globalité. Ceci peut être le cas si le robot est trop proche de la limite de la zone géographique ou s'il sort de celle-ci par exemple. Les premières et les deuxièmes données de comparaison étant de préférence déterminées indépendamment l'une de l'autre, les moyens d'immobilisation du robot sont préférentiellement activés indépendamment des deuxièmes données de comparaison et donc de la position du robot par rapport aux sous-zones. Ils agissent comme une sécurité ou barrière virtuelle additionnelle de limitation et contrôle du déplacement du robot au regard des paramètres définissant la zone géographique.

L'association de ces moyens d'immobilisation et/ou d'émetteurs de signaux bordant la zone géographique tels que décrit ci-dessus, permet optionnellement, en combinaison avec l'enregistrement des premiers paramètres sur le support de données, une double, voire une triple, sécurité pour s'assurer que le robot mobile ne sorte pas de la zone géographique lors de son déplacement, permettant ainsi au robot mobile d'opérer à proximité de lieux sensibles prohibés sans y pénétrer.

Les moyens d'immobilisation peuvent être réalisés comme comprenant ou consistant en un commutateur (une commande « on/off ») d'une source d'énergie de l'unité d'entraînement moteur, pour activer et/ou désactiver celle-ci sur base des premières données de comparaison. Cette réalisation permet une mise en œuvre aisée des moyens d'immobilisation du robot. Une activation des moyens d'immobilisation correspond alors de préférence à une simple désactivation de la source d'énergie via le commutateur entraînant une immobilisation immédiate et efficace de l'unité d'entraînement moteur.

Un autre objet de la présente invention est aussi de fournir une méthode de contrôle du déplacement d'un robot mobile dans une zone géographique qui soit plus sûr et plus dynamique.

À cet effet, l'invention propose une telle méthode comprenant les étapes :
(0) munir le robot de moyens tels qu'il soit comme selon l'invention ;
(i) recevoir les données de position au moyen du récepteur ;
(ii) déterminer les premières et les deuxièmes données de comparaison au moyen du module électronique ;
(iii) contrôler le déplacement du robot dans la zone géographique au moyen du système de navigation sur base des premières et des deuxièmes données de comparaison.
Cette méthode peut être formulée comme consistant en une méthode de contrôle du déplacement du robot selon l'invention dans la zone géographique comprenant les étapes (i) à (iii). En particulier, pour un robot standard fourni avant l'étape (0) comprenant une unité d'entraînement moteur et un système de navigation couplé à celle-ci, les moyens visés à l'étape (0) comprennent les éléments techniques du système de navigation (notamment sa configuration, le support de données et le module électronique) nécessaires pour que le robot soit selon l'invention.

La méthode permet de contrôler de façon sûre et dynamique le déplacement du robot dans la zone géographique pour les mêmes raisons qu'exposées pour le robot. En particulier, tous les modes de réalisation et tous les avantages du robot selon l'invention se transposent *mutatis mutandis* à la méthode. Réciproquement, les différents modes de réalisation et les avantages de la méthode introduits ci-après d'étendent *mutatis mutandis* au robot selon l'invention.

Une implémentation possible de l'étape (iii) est :
- lorsque les premières données de comparaison indiquent une sortie de la zone géographique, arrêter le robot, ou faire marche arrière ou demi-tour ;
- dans le cas contraire, poursuivre la trajectoire du robot en ligne droite jusqu'à ce que les deuxièmes données de comparaison indiquent un rapprochement à moins de x cm (par exemple, x > 0 compris entre 0 et 100, par exemple, x égal à environ 10, 20, 30, 40, 50 ou 60) d'un bord d'une sous-zone dans laquelle le robot se déplace, et/ou jusqu'à ce que les premières données de comparaison indiquent un rapprochement à moins de y cm (par exemple, y > 0 compris entre 0 et 100, par exemple, y égal à environ 10, 20, 30, 40, 50 ou 60) d'un bord de la zone géographique.
Une fois que le robot atteint x cm du bord de la sous-zone, il peut effectuer un demi-tour en partie dans l'espace formé par la bande de x cm longeant le bord de la sous-zone et repartir en sens inverse selon une trajectoire voisine et parallèle à la première trajectoire, et de façon analogue lorsque le robot atteint y cm du bord de la zone géographique. Les distances x et y cm sont de préférence déterminées comme des distances de sécurité pour s'assurer que le robot ne quitte par la sous-zone et/ou la zone géographique. Ces distances tiennent compte de latence en terme de réception des données de position par le récepteur. Par exemple, et de préférence, x et/ou y dépendent en temps réel d'une fréquence de réception des données de position, de la vitesse du robot et de son orientation dans la sous-zone et/ou la zone géographique. De façon complémentaire, la vitesse du robot peut également dépendre de ces paramètres. Par exemple, la vitesse du robot peut être proportionnelle à la fréquence de réception des données de position, et dépendre tant de l'orientation du robot que de la distance le séparant du bord le plus proche de la sous-zone et/ou de la zone géographique.

D'autres implémentations de l'étape (iii) sont possibles. Le déplacement du robot en termes de trajectoires est en outre de préférence prédéterminé par sous-zone et/ou pour toute la zone géographique via des paramètres enregistrés au préalable sur le support de données.

La méthode selon l'invention comprend de préférence une détermination et un enregistrement préalable des paramètres sur le support de données avant l'étape (i), préférentiellement au moyen d'une commande d'accès à distance du système de navigation.

Dans ce cas, les premiers paramètres sont préférentiellement déterminés et enregistrés avant les autres paramètres, ou à tout du moins avant les deuxièmes paramètres. Préférentiellement, une sous-étape de détermination des deuxièmes paramètres est mise en œuvre, préférentiellement par ordinateur (par exemple un ordinateur connecté, associé, ou comprenant la commande d'accès à distance) sur base de données d'entrée introduites par un utilisateur via ladite commande d'accès à distance, et sur base des premiers paramètres. Cette détermination est réalisée de façon à ce que les deuxièmes paramètres définissent effectivement des sous-zones comprises dans la zone géographique. En d'autres termes, elle est réalisée de préférence algorithmiquement pour que, si les données d'entrée associées à une sous-zone définissent cette dernière comme comprenant une partie située en dehors de la zone géographique, la sous-zone soit tronquée sans cette partie et que les deuxièmes paramètres correspondant soient définis sur cette base. La limitation du déplacement du robot à la zone géographique est alors d'autant plus fiable vu que les sous-zones sont bien limitées à celle-ci.

Selon un mode de réalisation de la présente invention, les sous-zones sont partitionnées d'une part en un ensemble de sous-zones interdites pour le robot et d'autre part un ensemble de sous-zones autorisées pour le robot. La nature d'une sous-zone (autorisée ou interdite) peut être associée à un parmi les deuxièmes paramètres pour chaque sous-zone et peut être variable dans le temps comme il est exposé précédemment. Le déplacement du robot est alors contrôlé via l'étape (iii) de telle façon que le robot ne se déplace que dans les sous-zones autorisées sans pénétrer dans les sous-zones interdites.

Ce mode de réalisation est avantageux pour exclure des parties de la zone géographique d'accès au robot. De telles parties peuvent représenter un danger pour le robot ou d'autres infrastructures ou personnes sur la zone géographique. Par exemple, il peut s'agir de parties inondées suite à de fortes pluies, de parties au relief accidenté, de parties sur lesquelles le robot ne doit ou ne peut pas opérer (par exemple, un bac à sable ou une partie bétonnée, dans le cas une tondeuse), ou de parties faisant l'objet d'activités incompatibles avec la présence du robot (par exemple, le voisinage immédiat d'une piste d'aéroport, un parcours de terrain de golf utilisé, ...) La « partition » des sous-zones en deux ensembles n'exclut pas qu'un des ensembles soit vide (par exemple, dans le cas où les sous-zones sont uniquement des sous-zones interdites).

Les sous-zones peuvent comprendre une sous-zone autorisée en forme de couloir reliant deux autres sous-zones autorisées. Un tel couloir permet de définir un chemin que doit emprunter le robot pour passer d'une des deux sous-zone à l'autre, typiquement pour deux sous-zones plus vastes. Ce type de sous-zone en forme de couloir peut également être généré algorithmiquement sous la forme de deuxièmes paramètres lors de ladite sous-étape de détermination des deuxièmes paramètres lorsque au moins deux des sous-zones autorisées correspondant aux données d'entrée sont totalement disjointes. En particulier, la mise en œuvre de cette sous-étape permet de pallier à une éventuelle distraction de l'utilisateur dans la définition des sous-zones si celui-ci venait à définir des sous-zones autorisées totalement disjointes car, dans un tel cas, le robot ne pourrait pas passer de l'une à l'autre. Optionnellement, l'utilisateur peut se voir proposé la sous-zone en forme de couloir pour approbation. Alternativement, lorsque deux sous-zones autorisées sont disjointes, le système de navigation peut contrôler le déplacement du robot dans la zone géographique principalement sur base des premières données de comparaison de façon à permettre au robot de passer d'une sous-zone à l'autre.

La génération algorithmique de ladite sous-zone en forme de couloir peut se faire de plusieurs façons connues, par exemple, par le plus court chemin entre les deux sous-zones à relier, dévié en suivant les bords des sous-zones interdites et de la zone géographique dans son ensemble. Dans le cas où les sous-zones ne pourraient pas être reliées (par exemple, si l'une est à la fois entourée et séparée de l'autre par une sous-zone interdite), la sous-étape de détermination n'apporte de préférence pas de modifications aux deuxièmes paramètres.

Dans le cas optionnel où les sous-zones comprennent une pluralité de sous-zones interdites, chacune au moins partiellement bordée d'une ou plusieurs sous-zones autorisées, ladite sous-étape de détermination des deuxièmes paramètres comprend de préférence les étapes suivantes :
- déterminer une distance minimale entre chaque paire de la pluralité de sous-zones interdites sur base des données d'entrée, et
- lorsque la distance minimale est à la fois non nulle et inférieure à un seuil prédéterminé : générer algorithmiquement, sous la forme de deuxièmes paramètres, des sous-zones divisionnaires autorisées, chacune comprise dans une des sous-zones autorisées bordant au moins partiellement les sous-zones interdites.

Ces étapes permettent de façon avantageuse de subdiviser une sous-zone autorisée initiale qui jouxterait des sous-zones interdites agencées trop proches l'une de l'autre. La distance minimale vaut, par exemple, environ 5, 10, 15 ou 20 mètres. En effet, dans ce cas, l'ensemble des sous-zones sur lesquelles le robot doit se déplacer peut avoir une géométrie très complexe susceptible de rendre le contrôle du déplacement, notamment la détermination de la trajectoire, du robot difficile et/ou lent. Par exemple, une certaine lenteur d'évaluation des données de comparaison par le système de navigation peut provoquer la mise à l'arrêt du robot ponctuelle lors de cette évaluation. Cet effet est notamment marqué si une orientation particulière de tonte parallèlement à une direction est souhaitée. La division des sous-zones autorisées permet de rendre plus aisé le respect d'un tel schéma de tonte par sous-zone divisionnaire.

Par exemple, la génération de ces sous-zones peut se faire via une division de la sous-zone autorisée en suivant un prolongement de bords (ceux-ci étant typiquement polygonaux) des sous-zones interdites, ou précisément de tangentes aux extrémités de ces bords.

Selon un mode de réalisation préféré de l'invention, le déplacement du robot se fait principalement selon une ou plusieurs directions définies, par sous-zone autorisée, par des troisièmes paramètres (qui pourraient être considérés de façon alternative comme faisant partie des deuxièmes paramètres) compris dans les paramètres enregistrés sur le support de données. Le robot effectue alors de préférence un déplacement en va et vient parallèlement à une première direction pour couvrir une sous-zone (autorisée), et puis effectue la même opération selon une deuxième direction et ainsi de suite. Le nombre de ces directions est compris entre 1 et 4 de préférence. Un schéma d'opération du robot est ainsi obtenu par sous-zone, ce qui peut s'avérer utile dans le cas d'un robot tondeuse opérant sur une zone géographique d'un terrain de sport pour concilier les lignes de tonte et celles du marquage sur le terrain.

Une sous-étape de détermination de ces troisièmes paramètres est mise en œuvre, de préférence par ordinateur, préférentiellement sur base de données d'entrée introduites par l'utilisateur au moyen de la commande d'accès à distance, et sur base des premiers et des deuxièmes paramètres, et ce de façon à ce que le robot soit apte à se déplacer en chaque point de chaque sous-zone autorisée. Cette mise en œuvre garantit la bonne opération du robot sur chaque sous-zone, et est en particulier avantageuse lorsqu'elle est implémentée de façon combinée avec la détermination de sous-zones divisionnaires.

Selon un mode de réalisation de la méthode selon la présente invention, une sous-étape de détermination et d'enregistrement des premiers paramètres sur le support de données (faisant par exemple partie de l'étape de détermination et d'enregistrement des paramètres préalable mentionnée ci-dessus) précède à la fois l'étape (i) la détermination et l'enregistrement des autres paramètres sur le support de données. Cette sous-étape comprend de préférence :
- un déplacement du robot le long d'un bord de la zone géographique,
- une transmission continue d'informations de position du robot à un ordinateur comprenant une commande d'accès à distance du système de navigation ;
- une transformation et/ou une modification des informations de position sous la forme des premiers paramètres, au moyen de la commande d'accès à distance.

Cette réalisation permet avantageusement une définition simple et sécurisée des premiers paramètres conforme aux normes en vigueur. Le déplacement du robot le long du bord de la zone géographique peut se faire sur une base virtuelle d'instructions de parcours du robot préalablement commandées, par exemple via la commande à distance, et/ou sur une base physique, le déplacement du robot se faisant le long d'un émetteur de signaux détectable par le robot et bordant la zone géographique, typiquement un câble électrique (potentiellement enterré) qui est parcouru par un courant électrique.

Les informations de position peuvent servir soit à définir précisément les premiers paramètres (par exemple, si le récepteur fait partie d'un système de positionnement de proximité et ne permet pas d'atteindre une très grande précision des données de position), ou à valider simplement des premiers paramètres provisoirement prédéterminés. Le parcours du robot peut être contrôlé manuellement (par un contrôle à distance) ou de façon autonome (par exemple, par détection du champ magnétique émis par un câble électrique). Dans le cas où le déplacement du robot se fait le long d'un câble électrique, le parcours peut être réalisé sur le câble, ou à distance prédéterminée de celui-ci, par exemple, 50 ou 80 cm.

Un défaut de cette réalisation lorsque le récepteur est un récepteur GNSS est qu'elle nécessite une connexion GNSS stable et continue durant tout le parcours du robot le long du bord de la zone géographique. Dans le cas contraire, la sous-étape doit être recommencée. Avantageusement, l'invention propose à l'utilisateur de ne devoir se conformer avec cette sous-étape que pour la zone géographique et non pour les sous-zones, celles-ci pouvant être librement modifiée, notamment via la commande à distance, ce qui constitue un gain de temps et de dynamisme considérable dans le contrôle du déplacement du robot.

L'utilisation de sous-zones peut néanmoins être également avantageuse pour faciliter l'exécution de cette sous-étape de détermination et d'enregistrement des premiers paramètres. En effet, le temps nécessaire au robot pour parcourir tout le bord de la zone géographique peut être très long, et donc le risque d'une coupure de connexion GNSS durant cette période peut être élevé. Plutôt que de parcourir directement le bord de toute la zone géographique, il est possible d'exploiter une partition de celle-ci en sous-zones, chacune ayant un bord commun avec la zone géographique, et d'exécuter alors cette sous-étape sur chacune des sous-zones. Comme celles-ci sont plus petites, le temps nécessaire pour en faire le tour et les risques de coupure de connexion GNSS sont réduits sur chaque sous-zone. Les premiers paramètres sont ainsi définis progressivement par bord de sous-zone en commun avec le bord de la zone géographique. Optionnellement, les sous-zones utilisées à cette fin peuvent être distincte de celles correspondant aux deuxièmes paramètres.

De façon précise, et de préférence, la zone géographique est préalablement partitionnée en une séquence de parties successivement voisines dont chacune comprend un bord commun avec le bord de la zone géographique, et les sous-étapes de déplacement du robot, de transmission continue des informations de position et de transformation et/ou modification des informations de position sont exécutées successivement pour chaque parties dans l'ordre de la séquence. De façon préférée, les parties de la zone géographique constituent des sous-zones.

Cette réalisation avantageuse de l'invention peut aussi être exploitée afin de modifier la définition de la zone géographique lorsqu'il s'agit simplement d'ajouter une partie de terrain à la zone géographique existante. Les premiers paramètres définissant le bord commun entre l'ancienne et la nouvelle zone géographique peuvent ainsi être conservés et seul le bord de la partie de terrain est à parcourir par le robot, pour redéfinir la partie du bord de la zone géographique associée à l'ajout de cette partie de terrain.

Selon un mode de réalisation préféré de la méthode de l'invention, la sous-étape de détermination et d'enregistrement des premiers paramètres comprend une génération d'une signature électronique associée aux premiers paramètres. Comme il est exposé précédemment dans l'exposé de l'invention, cette signature permet de détecter une modification ultérieure des premiers paramètres, via leur correspondance avec la signature, ce qui accroît la sécurité relative au contrôle du déplacement du robot dans la zone géographique. En particulier, la signature peut permettre de forcer une validation des premiers paramètres via une exécution de ladite sous-étape lorsque ces premiers paramètres ont été modifiés.

En ce sens, ce mode de réalisation est de préférence tel qu'une modification ultérieure des premiers paramètres invalide la zone géographique associée aux premiers paramètres modifiés et/ou les sous-zones de celles-ci de sorte que le déplacement du robot est contrôlé pour qu'il ne s'y déplace pas (/plus) tant qu'une nouvelle signature électronique associée aux premiers paramètres modifiées n'est pas générée via une (nouvelle) exécution de la sous-étape de détermination et d'enregistrement des premiers paramètres modifiés. Le terme « invalide » est ici à comprendre au sens décrit, à savoir au sens où le robot ne se déplace pas (/plus) dans une zone géographique ou une sous-zone invalidée.

De manière plus générale, lors de la sous-étape de détermination des autres paramètres, une validation de ceux-ci peut-être prévue. Par exemple, un parcours du robot le long des bords des sous-zones peut être optionnellement prévu pour contrôler ceux-ci. Dans ce cas, le parcours est réalisé, par exemple, par contrôle manuel, de façon indépendante d'éventuelles barrières physiques étant donné que les sous-zones ne sont généralement pas bordées de telles barrières. Semblablement, chacune des directions d'orientation du robot mentionnées ci-dessus peut être validée sur la zone géographique en fixant un point de référence de la zone et en éloignant le robot le long de cette direction à partir de ce point de référence sur une distance déterminée, par exemple 5, 10 ou 15 mètres. Ces sous-étapes de détermination, validation et enregistrement des paramètres précédent logiquement l'étape (i).

L'objet de l'invention est également présenté dans les revendications. Comme le comprendra un homme du métier à partir du présent exposé, les modes de réalisation présentés dans ces revendications peuvent être considérés seuls ou en combinaison. En particulier, une combinaison des revendications non explicite via leurs dépendances mais techniquement envisageable, et qui serait comprise comme telle par un homme du métier au vu de l'exposé de l'invention, fait partie de la présente demande.

### Brève description des figures

D'autres caractéristiques et avantages de la présente invention apparaîtront à la lecture de la description détaillée qui suit pour la compréhension de laquelle on se reportera aux figures annexées parmi lesquelles :
- la figure 1 représente une vue schématique tridimensionnelle d'un robot mobile selon un mode de réalisation de l'invention ;
- la figure 2 illustre un organigramme d'une méthode de contrôle du déplacement d'un robot selon un mode de réalisation préféré de l'invention ;
- les figures 3 à 6 illustrent des vues aériennes schématiques de configurations de zones géographiques comprenant des sous-zones et au sein desquelles se déplace un robot selon un mode de réalisation préféré de l'invention.

Les dessins des figures ne sont pas à l'échelle. Des éléments semblables sont en général dénotés par des références semblables dans les figures. Dans le cadre du présent document, les éléments identiques ou analogues peuvent porter les mêmes références. En outre, la présence de numéros ou lettres de référence aux dessins n'est pas limitative, y compris lorsque ces numéros ou lettres sont indiqués dans les revendications.

### Description détaillée de modes de réalisation de l'invention

Cette partie présente une description de modes de réalisation préférés de la présente invention. Cette dernière est décrite avec des réalisations particulières et des références à des figures sans que l'invention n'est pas limitée par celles-ci. En particulier, les dessins décrits ci-dessous ne sont que schématiques et ne sont pas limitants. En outre, la description présente, sans perte de généralité, le mode de réalisation préféré de l'invention où le robot est une ramasseuse de balles de golf robotisée autonome ou une tondeuse robotisée autonome. Celle-ci sera aussi également désignée par la référence 1 par abus de notation.

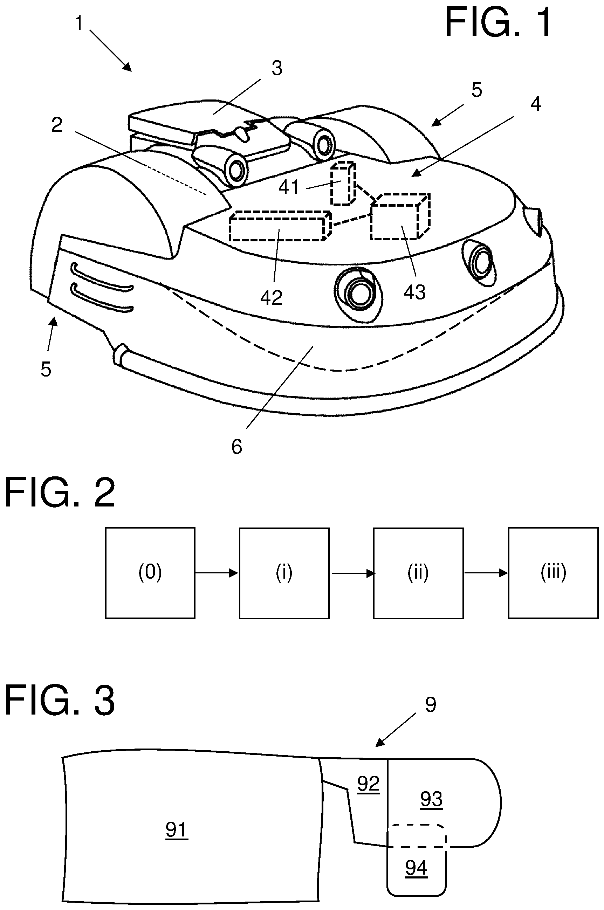

La figure 1 représente schématiquement un tel robot 1. Les emplacements des composantes ci-après introduites sont indiqués schématiquement et peuvent varier techniquement. Le robot 1 comprend :
- une unité d'entraînement moteur 2 associée par couplages électromécaniques à des roues 5 de propulsion pour supporter, propulser et/ou diriger le robot 1 ;
- des composantes techniques 6 usuelles du robot 1 lui permettant d'accomplir ses fonctions (par exemple, des lames de coupe pour la tondeuse, ou encore des rouleaux et un bac de récupération de balles pour la ramasseuse) et des couplages mécaniques correspondant au reste du robot 1 ;
- une source d'énergie 3 des composantes robot 1 (et plus particulièrement de l'unité d'entraînement moteur 2 et des composantes techniques 6), comprenant par exemple d'une batterie d'alimentation en électricité connectée à celles-ci.
Ces différents éléments sont tout à fait standard et connu d'un homme du métier, de telle sorte qu'ils ne seront pas décrits et/ou illustrés plus en détails. La source d'énergie est typiquement rechargeable à une station de charge du robot 1 placée sur une zone géographique d'opération du robot 1.

Le robot 1 comprend également un système de navigation 4 couplé à l'unité d'entraînement moteur 2 pour contrôler un déplacement de la tondeuse dans une zone géographique. Celle-ci comprend typiquement une portion herbeuse dans le cadre de cette description. La structure de ce système de navigation 4 et la façon avec laquelle il permet un contrôle du déplacement du robot 1 sont au cœur de l'invention comme mentionné dans l'exposé de l'invention. En particulier, comme exposé précédemment, le système de navigation 4 comprend un récepteur 41 de données de position du robot 1, de préférence un récepteur GPS (de préférence GPS RTK), un support de données 42 et un module électronique 43 connecté à ceux-ci (via des connexions représentées par des lignes pointillées).

Des paramètres de contrôle de déplacement du robot 1 sont enregistrés sur le support de données 42 et le modules électroniques 43 tient compte à la fois de ces paramètres et des données de position (i.e. des coordonnées GPS dans le cas d'un récepteur GPS) reçues par le récepteur 41 pour déterminer des données et/ou des instructions sur base desquelles le système de navigation 4 peut alors contrôler le déplacement du robot 1 dans la zone géographique.

Par exemple, des premiers paramètres parmi les paramètres correspondent à des coordonnées GPS du bord de la zone géographique (maximale) au sein de laquelle le robot 1 est apte à se déplacer et dans laquelle il doit rester. Ce bord est optionnellement délimité par un câble relié à un générateur et parcouru par des signaux et/ou un courant électrique (non représenté). Dans ce cas, le système de navigation 4 peut être muni d'un capteur de proximité de signaux (magnétiques) émis par le câble et tient compte de ces signaux dans le contrôle du déplacement du robot 1. Des deuxièmes paramètres parmi les paramètres correspondent à d'autres coordonnées GPS de bords de sous-zones de la zone géographique. Un de ces paramètres correspond de préférence, pour chaque sous-zone, à une information de permission ou d'interdiction de déplacement sur cette sous-zone, induisant des sous-zones « autorisées » et des sous-zones « interdites ».

D'autres paramètres peuvent être enregistrés sur le support de données comme il est détaillé dans l'exposé de l'invention. Tout ou partie des paramètres peuvent dépendre d'une composante de temps des données de position. Ainsi, par exemple, la définition (par exemple, l'étendue, ou même la simple existence) ou le statut (autorisé ou interdit) des sous-zones peut dépendre du temps.

Le module électronique 43 détermine alors des premières (resp. deuxièmes) données de comparaison entre les données de position du robot et les premiers (resp. deuxièmes) paramètres, par comparaison spatiale des coordonnées GPS. Par exemple, une distance peut être déterminée en temps réel entre le robot 1 et le bord de la zone géographique, ainsi que chaque bord de sous-zones, suivant une direction de parcours du robot 1. Le système de navigation peut déterminer de cette façon si, par exemple, que le robot 1 sort des sous-zones autorisées et si un changement de direction de parcours est à envisager.

La figure 2 représente les étapes de la méthode de contrôle du robot 1 dans l'ordre telles que divulguées dans l'exposé de l'invention et revendiquées. L'étape (0) correspond à l'étape de détermination et d'enregistrement des paramètres sur le support de données 42, comprenant, par exemple, la sous-étape initiale comme celle relative à la détermination des premiers paramètres, tel que mentionné dans l'exposé de l'invention. Les étapes (i) à (iii) sont, quant à elles, commentées dans l'exposé de l'invention.

Les figures 3 à 6 illustrent différentes zones géographiques, référencées par 9, avec des configurations distinctes en terme de sous-zones, référencées par 91 à 94.

Dans le cas de la figure 3, la zone géographique 9 est découpée en quatre sous-zones 91-94. Les sous-zones 93 et 94 s'intersectent, de sorte que le robot 1 peut toujours se déplacer sur l'intersection de ces sous-zones si l'une d'entre elles est autorisée. Un schéma d'opération du robot 1 est par exemple défini de façon journalière selon les activités menées dans la zone géographique. Par exemple, si la zone géographique est un complexe sportif dans lequel les sous-zones 91-94 sont des terrains herbeux pour différentes disciplines, il peut être contrôler que le robot 1 se déplace et opère sur les terrain en fonction des horaires des pratiques sportives. Les sous-zones sur lesquelles le robot peut se déplacer sont autorisées selon cet horaires, et les autres sont soit désactivées (en d'autres termes, elles ne sont pas considérées pour certains créneaux horaires) soit interdites.

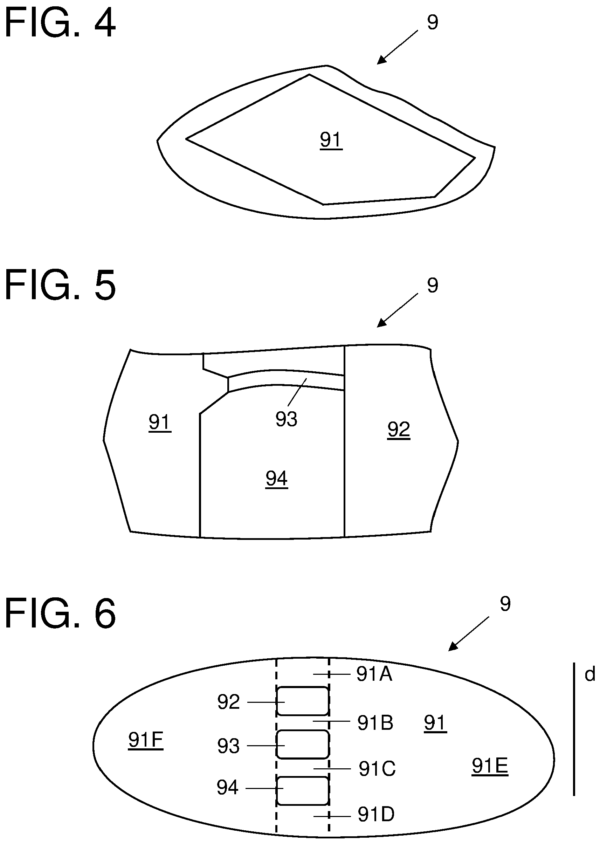

Dans le cas de la figure 4, une sous-zone 91 est autorisée en permanence et correspond presqu'à toute la zone géographique. L'espace entre la frontière de celle-ci et celle de la sous-zone 91 peut être à éviter pour le robot 1, par exemple, car il n'est pas nécessaire que le robot 1 y opère, ou car elle présente un relief qui n'est pas adapté au déplacement du robot. Cet espace peut éventuellement être considéré comme une sous-zone interdite.

Dans le cas de la figure 5, comme deux sous-zones 91, 92 autorisées sont disjointes, une sous-zone 93 autorisée en forme de couloir est prévue pour les relier, de façon à permettre au robot 1 de se déplacer entre elles. Cette sous-zone 93 peut être prévue par l'utilisateur mais également générée algorithmiquement à la sous-étape de détermination des deuxième paramètres de l'étape (0) comme il est décrit dans l'exposé de l'invention. Typiquement, cette génération se fait par une génération tubulaire autour du plus court chemin reliant deux points des deux sous-zones 91, 92, de façon à être le plus court possible. Le couloir ainsi généré peut éventuellement être dévié pour suivre les bords de sous-zones interdites et de la zone géographique 9 dans son ensemble. La figure 5 représente d'ailleurs une sous-zone 94 interdite bordant le couloir, ce qui explique la forme courbée de celui-ci.

Dans le cas de la figure 6, la zone géographique 9 comprend une pluralité de sous-zones 92-94 interdites en forme d'îlots immergés dans une sous-zone 91 autorisée. Ces sous-zones 92-94 correspondent, par exemple, à divers obstacles physiques sur la sous-zone 91, ou à des endroits inaccessibles voire dangereux pour le robot 1. En pratique, ce type de situation se rencontre assez fréquemment pour une tondeuse ou une ramasseuse de balles de golf, de sorte que le nombre de telles sous-zones interdites peut être élevé (10, 20 voire 30 ou plus telles sous-zones). La zone géographique 9 peut en outre comprendre d'autres telles sous-zones autorisées enfermant d'autres collections d'îlots de sous-zones interdites.

Il se peut que la proximité des sous-zones 92-94 interdites soit trop grande pour permettre au robot 1 d'opérer et/ou de se déplacer efficacement au sein de la sous-zone 91, par exemple au regard d'une direction d de parcours du robot 1 définie (par exemple, via un deuxième ou troisième paramètre comme expliqué dans l'exposé de l'invention). Dans ce cas, le système de navigation 4 n'arrive pas nécessairement à déterminer un déplacement du robot 1 couvrant l'ensemble de la sous-zone 91, ce qui peut entraîner des couloirs auxquels le robot 1 n'accède pas.

Pour remédier à ce problème, il est prévu, de modifier algorithmiquement les paramètres associés à la direction d sur base des premiers et des deuxièmes paramètres, de façon à ce que le robot 1 soit apte à se déplacer en chaque point de chaque sous-zone 91 autorisée. Dans le cas présent, ceci peut être envisagé faisant tourner de 90° la direction d, et/ou en ajoutant une deuxième direction de déplacement possible pour le robot 1, de sorte qu'après un cycle complet d'aller-retour selon la direction d, il change de direction de déplacement.

Une autre façon de remédier au problème, de façon compatible avec celle exposée ci-dessus, est de diviser la sous-zone 91 en plus petites sous-zones divisionnaires 91A-F autorisée, par exemple, algorithmiquement par prolongement d'une tangente aux extrémités des bords des sous-zones interdites, comme il est illustré en lignes pointillées. En particulier, les parcours du robot 1 par sous-zone autorisée 91A-F sont ainsi réduits en longueur et le système de navigation 4 peut de la sorte contrôler le déplacement du robot 1 plus facilement selon la direction d (et/ou les directions additionnelle) pour couvrir toute la sous-zone autorisée 91 initiale.

La zone géographique 9 est, par exemple, un terrain de golf nécessitant à la fois d'être tondu par une tondeuse robotisée et d'être nettoyé par une ramasseuse de balles de golf robotisée. En particulier, la zone géographique peut comprendre plusieurs tels robots 1 semblables ou non opérant de concert sur des sous-zones distinctes. Pour éviter tout conflit entre les robots 1 les sous-zones autorisées de l'un peuvent être interdites à l'autre et inversement, avec une permutation prévue périodiquement.

En, résumé la présente invention concerne un robot 1 mobile muni d'un système de navigation 4 pour contrôler le déplacement du robot 1 dans une zone géographique 9 sur base de paramètres de définition de sous-zones 91-94 de celle-ci. L'invention concerne aussi une méthode de contrôle du déplacement du robot 1 mise en œuvre au moyen du système de navigation 4.

L'invention a été décrite au regard de modes de réalisations spécifiques, qui ont une valeur purement illustrative et ne doivent pas être considérés comme limitatifs. En particulier, un homme du métier comprendra que les configurations des figures 3 à 6 ne représentent qu'un échantillon des vastes possibilités offertes par l'invention. D'une manière générale, il apparaîtra évident pour un homme du métier que l'invention revendiquée n'est pas limitée aux exemples illustrés et/ou décrits ci-dessus.

## Revendications

1. Robot (1) mobile comprenant :
- une unité d'entraînement moteur (2) ;
- un système de navigation (4) couplé à l'unité d'entraînement moteur (2) pour contrôler un déplacement du robot (1) dans une zone géographique (9) ;
**caractérisé en ce que** le système de navigation (4) comprend :
• un récepteur (41) pour recevoir des données de position du robot (1),
• un support de données (42) sur lequel sont enregistrés des paramètres de contrôle de déplacement du robot (1),
les paramètres comprenant :
- des premiers paramètres de définition de la zone géographique (9) associés à une signature électronique,
- des deuxièmes paramètres de définition d'une ou plusieurs sous-zones (91-94) de la zone géographiques (9),
• une commande d'accès à distance pour :
- modifier les premiers paramètres et générer la signature électronique à laquelle les premiers paramètres sont associés sur base d'une validation des premiers paramètres comprenant un déplacement du robot (1) le long d'un bord de la zone géographique (9) définie par les premiers paramètres modifiés ;
- modifier librement les deuxièmes paramètres ;
• un module électronique (43) connecté au récepteur (41) et au support de données (42), et programmé pour déterminer :
- des premières données de comparaison entre les données de position du robot (1) et les premiers paramètres de définition de la zone géographique (9),
- des deuxièmes données de comparaison entre les données de position du robot (1) et les deuxièmes paramètres de définition de la ou des sous-zones (91-94) ;
**et en ce que** le système de navigation (4) est configuré pour contrôler le déplacement du robot (1) dans la zone géographique (9) sur base des premières et des deuxièmes données de comparaison.

2. Robot (1) selon la revendication 1, dans lequel le récepteur (41) est un récepteur de signaux d'un système de positionnement par satellites (GNSS), et dans lequel les premiers et les deuxièmes paramètres comprennent des coordonnées GNSS.

3. Robot (1) selon la revendication 1 ou 2, comprenant des moyens d'immobilisation pour immobiliser le robot (1), le système de navigation (4) étant couplé aux moyens d'immobilisation pour activer et/ou désactiver ceux-ci sur base des premières données de comparaison.

4. Robot (1) selon l'une quelconque des revendications 1 à 3, dans lequel les données de position comprennent une composante de temps, les deuxièmes paramètres dépendant de cette composante de temps.

5. Robot (1) selon l'une quelconque des revendications 1 à 4, dans lequel le contrôle du déplacement du robot (1) dans la zone géographique (9) sur base des deuxièmes données de comparaison est indépendant d'une barrière physique délimitant une ou plusieurs des sous-zones (91-94) lorsque la zone géographique (9) comprend une telle barrière physique.

6. Robot (1) selon l'une quelconque des revendications 1 à 5, consistant en une ramasseuse de balles de golf robotisée ou en une tondeuse robotisée.

7. Méthode de contrôle d'un déplacement d'un robot (1) selon l'une quelconque des revendications 1 à 6 dans une zone géographique (9), la méthode comprenant les étapes suivantes :
(i) recevoir les données de position au moyen du récepteur (41) ;
(ii) déterminer les premières et les deuxièmes données de comparaison au moyen du module électronique (43) ;
(iii) contrôler le déplacement du robot (1) dans la zone géographique (9) au moyen du système de navigation (4) sur base des premières et des deuxièmes données de comparaison.

8. Méthode selon la revendication 7, comprenant une détermination et un enregistrement des paramètres sur le support de données (42) avant l'étape (i) au moyen de la commande d'accès à distance du système de navigation (4), dans laquelle une sous-étape de détermination des deuxièmes paramètres est mise en œuvre par ordinateur sur base de données d'entrée introduites par un utilisateur au moyen de la commande d'accès à distance, et sur base des premiers paramètres, de façon à ce que les deuxièmes paramètres définissent des sous-zones (91-94) comprises dans la zone géographique (9).

9. Méthode selon la revendication 7 ou 8, dans laquelle les sous-zones (91-94) sont partitionnées en un ensemble de sous-zones interdites pour le robot (1) et un ensemble de sous-zones autorisées pour le robot (1), le déplacement du robot (1) étant contrôlé à l'étape (iii) de telle façon que le robot (1) ne se déplace que dans les sous-zones autorisées sans pénétrer dans les sous-zones interdites.

10. Méthode selon la revendication 9 lorsqu'elle dépend de la revendication 8, dans laquelle les sous-zones (91-94) comprennent une sous-zone autorisée en forme de couloir reliant deux autres sous-zones autorisées et qui est générée algorithmiquement sous la forme de deuxièmes paramètres lors de la sous-étape de détermination des deuxièmes paramètres lorsque au moins deux des sous-zones autorisées correspondant aux données d'entrée sont totalement disjointes.

11. Méthode selon la revendication 9 ou 10 lorsqu'elle dépend de la revendication 8, dans laquelle les sous-zones (91-94) comprennent une pluralité de sous-zones interdites, chacune au moins partiellement bordée d'une ou plusieurs sous-zones autorisées, et dans laquelle la sous-étape de détermination des deuxièmes paramètres comprend les étapes suivantes :
- déterminer une distance minimale entre chaque paire de la pluralité de sous-zones interdites sur base des données d'entrée, et
- lorsque la distance minimale est à la fois non nulle et inférieure à un seuil prédéterminé : générer algorithmiquement, sous la forme de deuxièmes paramètres, des sous-zones divisionnaires autorisées (91A-F), chacune comprise dans une des sous-zones autorisées bordant au moins partiellement les sous-zones interdites.

12. Méthode selon l'une quelconque des revendications 9 à 11, dans laquelle le déplacement du robot (1) se fait principalement selon une ou plusieurs directions (d) définies, par sous-zone autorisée, par des troisièmes paramètres compris dans les paramètres enregistrés sur le support de données (42).

13. Méthode selon la revendication 12 lorsqu'elle dépend de la revendication 8, dans laquelle une sous-étape de détermination des troisièmes paramètres est mise en œuvre par ordinateur sur base de données d'entrée introduites par l'utilisateur au moyen de la commande d'accès à distance, et sur base des premiers et des deuxièmes paramètres, de façon à ce que le robot (1) soit apte à se déplacer en chaque point de chaque sous-zone autorisée.

14. Méthode selon l'une quelconque des revendications 7 à 13, comprenant une sous-étape de détermination et d'enregistrement des premiers paramètres sur le support de données (42) précédant l'étape (i) ainsi que la détermination et l'enregistrement des autres paramètres sur le support de données (42), cette sous-étape comprenant :
- un déplacement du robot (1) le long d'un bord de la zone géographique (9),
- une transmission continue d'informations de position du robot (1) à un ordinateur comprenant la commande d'accès à distance du système de navigation (4) ;
- une transformation et/ou une modification des informations de position sous la forme des premiers paramètres, au moyen de la commande d'accès à distance ;
- une génération de la signature électronique associée aux premiers paramètres au moyen de la commande d'accès à distance.

15. Méthode selon la revendication 14, dans laquelle la zone géographique (9) est préalablement partitionnée en une séquence de parties successivement voisines dont chacune comprend un bord commun avec le bord de la zone géographique (9), et dans laquelle les sous-étapes de déplacement du robot (1), de transmission continue des informations de position et de transformation et/ou modification des informations de position sont exécutées successivement pour chaque parties dans l'ordre de la séquence.

16. Méthode selon la revendication 15, dans laquelle les parties de la zone géographique (9) constituent des sous-zones (91-94).

17. Méthode selon l'une quelconque des revendications 14 à 16, dans laquelle une modification ultérieure des premiers paramètres invalide la zone géographique (9) associée aux premiers paramètres modifiés et/ou les sous-zones (91-94) de celles-ci de sorte que le déplacement du robot (1) est contrôlé pour qu'il ne s'y déplace pas tant qu'une nouvelle signature électronique associée aux premiers paramètres modifiées n'est pas générée via une nouvelle exécution de la sous-étape de détermination et d'enregistrement des premiers paramètres modifiés.

## Patentansprüche

1. Mobiler Roboter (1), umfassend:
- eine Motorantriebseinheit (2);
- ein Navigationssystem (4), das an die Motorantriebseinheit (2) gekoppelt ist, um eine Bewegung des Roboters (1) in einer geographischen Zone (9) zu kontrollieren;
**dadurch gekennzeichnet, dass** das Navigationssystem (4) Folgendes umfasst:
- einen Empfänger (41) zum Empfangen von Positionsdaten des Roboters (1),
- einen Datenträger (42), auf dem Parameter zur Bewegungskontrolle des Roboters (1) gespeichert sind;
wobei die Parameter Folgendes umfassen:
- erste Parameter zur Definition der geographischen Zone (9), die mit einer elektronischen Signatur assoziiert sind,
- zweite Parameter zur Definition einer oder mehrere Teilzonen (91-94) der geographischen Zone (9),
- eine Fernzugriffssteuerung zum:
- Modifizieren der ersten Parameter und Erzeugen der elektronischen Signatur, mit der die ersten Parameter assoziiert sind, auf Grundlage einer Validierung der ersten Parameter, umfassend eine Bewegung des Roboters (1) entlang eines Rands der geographischen Zone (9), die durch die ersten modifizierten Parameter definiert ist;
- freien Modifizieren der zweiten Parameter;
- ein elektronisches Modul (43), verbunden mit dem Empfänger (41) und dem Datenträger (42) und programmiert zum Bestimmen:
- von ersten Vergleichsdaten zwischen den Positionsdaten des Roboters (1) und den ersten Parametern zur Definition der geographischen Zone (9),
- von zweiten Vergleichsdaten zwischen den Positionsdaten des Roboters (1) und den zweiten Parametern zur Definition der Teilzone(n) (91-94);
**und dadurch, dass** das Navigationssystem (4) konfiguriert ist, um die Bewegung des Roboters (1) in der geographischen Zone (9) auf Grundlage der ersten und der zweiten Vergleichsdaten zu kontrollieren.

2. Roboter (1) nach Anspruch 1, wobei der Empfänger (41) ein Empfänger von Signalen eines globalen Navigationssatellitensystems (GNSS) ist und wobei die ersten und die zweiten Parameter GNSS-Koordinaten umfassen.

3. Roboter (1) nach Anspruch 1 oder 2, umfassend Feststellmittel um den Roboter (1) festzustellen, wobei das Navigationssystem (4) mit den Feststellmitteln gekoppelt ist um diesen zu aktivieren/deaktivieren auf Grundlage der ersten Vergleichsdaten.

4. Roboter (1) nach einem der Ansprüche 1 bis 3, wobei die Positionsdaten eine Zeitkomponente umfassen, wobei die zweiten Parameter von dieser Zeitkomponente abhängen.

5. Roboter (1) nach einem der Ansprüche 1 bis 4, wobei die Kontrolle der Bewegung des Roboters (1) in der geographischen Zone (9) auf Grundlage der zweiten Vergleichsdaten unabhängig ist von einer physikalischen Barriere, die eine oder mehrere Teilzonen(n) (91-94) begrenzt, wenn die geographische Zone (9) eine solche physikalische Barriere umfasst.

6. Roboter (1) nach einem der Ansprüche 1 bis 5, bestehend aus einem robotisierten Golfballsammler oder einem robotisierten Rasenmäher.

7. Kontrollverfahren einer Bewegung eines Roboters (1) nach einem der Ansprüche 1 bis 6 in einer geographischen Zone (9), wobei das Verfahren die folgenden Schritte umfasst:
(i) Empfangen der Positionsdaten mittels des Empfängers (41);
(ii) Bestimmen der ersten und der zweiten Vergleichsdaten mittels des elektronischen Moduls (43);
(iii) Kontrollieren der Bewegung des Roboters (1) in der geographischen Zone (9) mittels des Navigationssystems (4) auf Grundlage der ersten und der zweiten Vergleichsdaten.

8. Verfahren nach Anspruch 7, umfassend eine Bestimmung und eine Aufzeichnung von Parametern auf dem Datenträger (42) vor Schritt (i) mittels der Fernzugriffssteuerung des Navigationssystems (4), wobei ein Teilschritt der Bestimmung der zweiten Parameter auf Grundlage der Eingangsdaten, die mittels der Fernzugriffssteuerung durch einen Anwender eingegeben werden, und auf Grundlage der ersten Parameter, von einem Computer derart durchgeführt wird, dass die zweiten Parameter die Teilzonen (91-94) definieren, die in der geographischen Zone (9) umfasst sind.

9. Verfahren nach Anspruch 7 oder 8, wobei die Teilzonen (91-94) in eine Gruppe von für den Roboter (1) verbotenen Teilzonen und eine Gruppe von für den Roboter (1) erlaubten Teilzonen aufgeteilt werden, wobei die Bewegung des Roboters (1) bei Schritt (iii) derart kontrolliert wird, dass der Roboter (1) sich nur in den erlaubten Teilzonen bewegt, ohne in die verbotenen Teilzonen einzudringen.

10. Verfahren nach Anspruch 9, wenn abhängig von Anspruch 8, wobei die Teilzonen (91-94) eine erlaubte Teilzone in Form eines Durchgangs umfassen, der zwei andere erlaubte Teilzonen verbindet und der algorithmisch in Form von zweiten Parametern bei dem Teilschritt der Bestimmung von zweiten Parametern erzeugt wird, wenn mindestens zwei der erlaubten Teilzonen, die den Eingangsdaten entsprechen, vollständig getrennt sind.

11. Verfahren nach Anspruch 9 oder 10, wenn abhängig von Anspruch 8, wobei die Teilzonen (91-94) eine Vielzahl von verbotenen Teilzonen umfassen, die jeweils mindestens teilweise von einer oder mehreren erlaubten Teilzonen umrandet sind, und wobei der Teilschritt der Bestimmung von zweiten Parametern die folgenden Schritte umfasst:
- Bestimmen eines minimalen Abstands zwischen jedem Paar der Vielzahl von verbotenen Teilzonen auf Grundlage der Eingangsdaten und
- wenn der minimale Abstand gleichzeitig von null verschieden und kleiner ist als ein vorbestimmter Schwellenwert: algorithmisches Erzeugen, in Form von zweiten Parametern, von teilenden erlaubten Teilzonen (91A-F), die jeweils in einer der erlaubten Teilzonen, die mindestens teilweise an die verbotenen Teilzonen angrenzen, umfasst sind.

12. Verfahren nach einem der Ansprüche 9 bis 11, wobei die Bewegung des Roboters (1) hauptsächlich nach einer oder mehreren durch dritte Parameter, pro erlaubte Teilzone, definierten Richtungen (d) erfolgt, die in den auf dem Datenträger (42) aufgezeichneten dritten Parametern umfasst sind.

13. Verfahren nach Anspruch 12, wenn abhängig von Anspruch 8, wobei ein Teilschritt der Bestimmung der dritten Parametern auf Grundlage von durch den Anwender mittels der Fernzugriffssteuerung eingegebenen Eingangsdaten und auf Grundlage der ersten und der zweiten Parameter derart durch einen Computer durchgeführt wird, dass der Roboter (1) in der Lage ist, sich an jeden Punkt der erlaubten Teilzone zu bewegen.

14. Verfahren nach einem der Ansprüche 7 bis 13, umfassend einen Teilschritt der Bestimmung und Aufzeichnung von ersten Parametern auf dem Datenträger (42) vor Schritt (i) sowie die Bestimmung und Aufzeichnung der anderen Parametern auf dem Datenträger (42), wobei dieser Teilschritt Folgendes umfasst:
- eine Bewegung des Roboters (1) entlang eines Rands der geographischen Zone (9),
- eine kontinuierliche Übertragung von Positionsinformationen des Roboters (1) an einen Computer, der die Fernzugriffssteuerung des Navigationssystems (4) umfasst;
- eine Transformation und/oder eine Modifikation der Positionsinformationen in Form von ersten Parametern mittels der Fernzugriffssteuerung;
- eine Erzeugung der elektronischen Signatur, die mit den ersten Parametern assoziiert ist, mittels der Fernzugriffssteuerung.

15. Verfahren nach Anspruch 14, wobei die geographische Zone (9) im Voraus in eine Sequenz von hintereinander benachbarten Teilen aufgeteilt wird, von denen jedes einen mit dem Rand der geographischen Zone (9) gemeinsamen Rand umfasst, und wobei die Teilschritte der Bewegung des Roboters (1), der kontinuierlichen Übertragung der Positionsinformationen und der Transformation und/oder Modifikation der Positionsinformationen für jedes der Teile in Reihenfolge der Sequenz hintereinander ausgeführt werden.

16. Verfahren nach Anspruch 15, wobei die Teile der geographischen Zone (9) Teilzonen (91-94) konstituieren.

17. Verfahren nach einem der Ansprüche 14 bis 16, wobei eine nachträgliche Modifikation der ersten Parametern die geographische Zone (9), die mit den ersten modifizierten Parametern und/oder den Teilzonen (91-94) davon assoziiert ist, ungültig macht, damit die Bewegung des Roboters (1) kontrolliert wird, sodass er sich nicht bewegt, solange eine neue elektronische Signatur, die mit den ersten modifizierten Parametern assoziiert ist, nicht über eine neue Ausführung des Teilschritts der Bestimmung und Aufzeichnung der ersten modifizierten Parameter erzeugt wird.

## Claims

1. A mobile robot (1) comprising:
- a motor drive unit (2);
- a navigation system (4) coupled to the motor drive unit (2) for controlling a movement of the robot (1) in a geographical area (9);
**characterized in that** the navigation system (4) comprises:
- a receiver (41) for receiving position data of the robot (1),
- a data medium (42) on which parameters for controlling the movement of the robot (1) are recorded,
the parameters comprising:
∘ first parameters defining the geographical area (9) associated with an electronic signature,
∘ second parameters defining one or more sub-areas (91-94) of the geographical area (9),
- a remote access command for:
∘ modifying the first parameters and generating the electronic signature to which the first parameters are associated on the basis of a validation of the first parameters comprising a movement of the robot (1) along an edge of the geographical area (9) defined by the modified first parameters;
∘ modifying freely the second parameters;
- an electronic module (43) connected to the receiver (41) and to the data medium (42), and programmed to determine:
∘ first comparison data between the position data of the robot (1) and the first parameters defining the geographical area (9),
∘ second comparison data between the position data of the robot (1) with the second parameters for defining the sub-area or sub-areas (91-94);
**and in that** the navigation system (4) is configured to control the movement of the robot (1) in the geographical area (9) on the basis of the first and second comparison data.

2. The robot (1) as claimed in claim 1, wherein the receiver (41) is a signal receiver of a Global Navigation Satellite System (GNSS), and wherein the first and second parameters comprise the GNSS coordinates.

3. The robot (1) according to claim 1 or 2, comprising means for immobilizing the robot (1), the navigation system (4) being coupled to the immobilization means in order to activate and/or deactivate them on the basis of the first comparison data.

4. The robot (1) according to any one of claims 1 to 3, wherein the position data comprises a time component, the second parameters depending on this time component.

5. The robot (1) according to any one of claims 1 to 4, wherein the control of the movement of the robot (1) in the geographical area (9) on the basis of the second comparison data is independent of a physical barrier delimiting one or more of the sub-areas (91-94) when the geographical area (9) comprises such a physical barrier.

6. The robot (1) according to any one of claims 1 to 5, consisting of a robotic golf ball picker or a robotic lawn mower.

7. A method for controlling a movement of a robot (1) according to any one of claims 1 to 6 in a geographical area (9),
the method comprising the following steps:
(i) receiving the position data by means of the receiver (41);
(ii) determining the first and the second comparison data by means of the electronic module (43);
(iii) controlling the movement of the robot (1) in the geographical area (9) by means of the navigation system (4) on the basis of the first and second comparison data.

8. The method according to claim 7, comprising determining and recording the parameters on the data medium (42) prior to step (i) by means of the remote access command of the navigation system (4), wherein a sub-step of determining the second parameters is implemented by computer on the basis of input data entered by a user by means of the remote access command, and on the basis of the first parameters, so that the second parameters define sub-areas (91-94) comprised in the geographical area (9).

9. The method according to claim 7 or 8, wherein the sub-areas (91-94) are partitioned into an assembly of sub-areas prohibited for the robot (1) and an assembly of sub-areas authorized for the robot (1), the movement of the robot (1) being controlled in step (iii) in such a way that the robot (1) moves only in the authorized sub-areas without entering the prohibited sub-areas.

10. The method as claimed in claim 9 when dependent on claim 8, wherein the sub-areas (91-94) comprise a corridor-shaped authorized sub-area connecting two other authorized sub-areas and which is algorithmically generated in the form of second parameters in the second parameter determination sub-step when at least two of the authorized sub-areas corresponding to the input data are completely disjoint.

11. The method according to claim 9 or 10 when dependent on claim 8, wherein the sub-areas (91-94) comprise a plurality of prohibited sub-areas, each at least partially bordered by one or more authorized sub-areas, and wherein the sub-step of determining the second parameters comprises the following steps:
- determining a minimum distance between each pair of the plurality of prohibited sub-areas on the basis of the input data, and
- when the minimum distance is both non-zero and less than a predetermined threshold: algorithmically generating, in the form of second parameters, authorized divisional sub-areas (91A-F), each comprised in one of the authorized sub-areas at least partially bordering the prohibited sub-areas.

12. The method according to any one of claims 9 to 11, wherein the robot (1) is moved mainly in one or more directions (d) defined, per authorized sub-area, by third parameters comprised in the parameters recorded on the data medium (42).

13. The method according to claim 12 when dependent on claim 8, wherein a sub-step of determining the third parameters is implemented by computer on the basis of input data entered by the user by means of the remote access command, and on the basis of the first and second parameters, so that the robot (1) is able to move to each point of each authorized sub-area.

14. The method according to any one of claims 7 to 13, comprising a sub-step of determining and recording the first parameters on the data medium (42) preceding both step (i) and the determining and recording the other parameters on the data medium (42), this sub-step comprising:
- moving the robot (1) along one edge of the geographical area (9),
- transmitting continuously position information of the robot (1) to a computer comprising the remote access command of the navigation system (4);
- transforming and/or modifying the position information in the form of the first parameters by means of the remote access command;
- generating the electronic signature associated with the first parameters by means of the remote access command.

15. The method according to claim 14, wherein the geographical area (9) is previously partitioned into a sequence of successively adjacent portions each of which comprises an edge in common with the edge of the geographical area (9), and wherein the sub-steps of moving the robot (1), transmitting continuously the position information and transforming and/or modifying the position information are executed successively for each portion in the order of the sequence.

16. The method according to claim 15, wherein the portions of the geographical area (9) constitute sub-areas (91-94).

17. The method according to any one of claims 14 to 16, wherein a subsequent modification of the first parameters invalidates the geographical area (9) associated with the modified first parameters and/or the sub-areas (91-94) thereof so that the movement of the robot (1) is controlled so that it does not move there until a new electronic signature associated with the modified first parameters is generated via a new execution of the sub-step of determining and recording the modified first parameters.
